(19) Europäisches Patentamt

European Patent Office

Office européen des brevets

(11) **EP 1 647 369 A2**

(12) **EUROPEAN PATENT APPLICATION**

(43) Date of publication:
**19.04.2006 Bulletin 2006/16**

(51) Int Cl.:
***B25J 9/16*** *(2006.01)*

(21) Application number: **05022138.1**

(22) Date of filing: **11.10.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **18.10.2004 JP 2004303425**

(71) Applicant: **FANUC LTD**
**Minamitsuru-gun,**
**Yamanashi 401-0597 (JP)**

(72) Inventors:
 • **Watanabe, Atsushi**
  **Suginami-ku**
  **Tokyo 168-0072 (JP)**
 • **Nihei, Ryo**
  **Fujiyoshida-shi**
  **Yamanashi 403-0005 (JP)**

 • **Kato, Tetsuaki**
  **Hadano-shi**
  **Kanagawa 259-1326 (JP)**
 • **Kuroshita, Teruki**
  **FANUC Dai3virakaramatsu**
  **Minamitsuru-gun**
  **Yamanashi 401-0511 (JP)**
 • **Mogami, Kota**
  **FANUC Dai3virakaramatsu**
  **Minamitsuru-gun**
  **Yamanashi 401-0511 (JP)**

(74) Representative: **Schmidt, Steffen J.**
  **Wuesthoff & Wuesthoff,**
  **Patent- und Rechtsanwälte,**
  **Schweigerstrasse 2**
  **81541 München (DE)**

(54) **Robot with learning control function and method for controlling the robot**

(57)   A robot (1) with a learning control function for improving the accuracy of the trajectory of an end effector (5) and a method for controlling the robot. An acceleration sensor (50) and a vision sensor (52) are attached to the end effector of the robot. In this state, the motion of the end effector is measured and a test operation of a motion program is repeatedly executed, whereby a robot control device (10) learns an optimized motion of the robot. In a subsequent actual operation, the acceleration sensor and the vision sensor are not used and the motion of the robot is executed based on the learned optimized motion. The sensors may be removed during the actual operation.

Fig.1

EP 1 647 369 A2

**Description**

BACKGROUND OF THE INVENTION

1. Field of the Invention

The present invention relates to a robot with a learning control function and a method for controlling the robot.

2. Description of the Related Art

As a conventional device with a learning control function used for controlling the motion of a robot, a servo control device described in Japanese Unexamined Patent Publication (Kokai) No. 2004-227163 is known. The servo control device includes a learning control means for making correction data based on a positional deviation in the same command pattern, storing the correction data in a memory and correcting the positional deviation. The learning control means may make the correction data and correct the positional deviation from a start command to an end command of the learning control. In this case, a sensor used for the learning control is generally attached to an end effector of the robot for outputting the data.

Also, in relation to the correction of the position, an industrial robot having a vision sensor is described in Japanese Unexamined Patent Publication (Kokai) No. 5-92378. The object of the industrial robot is to correct the position of an arm of the robot in a short time with high accuracy. The robot has a vision sensor attached to the end of the arm, a sensor driving means for driving the sensor such that the position of a sensor coordinate system is constant relative to a robot coordinate system and a control means for correcting the position of the robot based on information of the sensor.

When motion control with high accuracy is required, the learning control generally carried out during an actual operation is repeated. In this case, the maintenance of the sensor must be frequently carried out and, further, some other sensors must be stocked as spares for exchange when a sensor fails. Also, the sensor may interfere with other equipment, depending on an operating environment of the end effector.

The industrial robot described in Japanese Unexamined Patent Publication (Kokai) No. 5-92378 uses a vision sensor. However, the vision sensor generally has a frequency characteristic which is capable of following a relative low frequency but not capable of following a high frequency. Therefore, the sensor is not suitable for the control with high accuracy.

SUMMARY OF THE INVENTION

Accordingly, an object of the present invention is to provide a robot capable of executing a learning control which may follow a high frequency and a method for controlling the robot, whereby the number of sensors and the maintenance cost of the sensors may be reduced and the trajectory of an end effector of the robot may be inexpensively corrected.

In order to achieve the above object, according to one aspect of the invention, there is provided a robot comprising: a robot mechanism; an end effector attached to the robot mechanism; a measuring part for measuring moving data of the robot mechanism or the end effector by the motion of the robot mechanism; and a control device for controlling the motion of the robot mechanism, wherein the control device comprises: a learning control part for carrying out a learning control, to improve the motion of the robot mechanism, by controlling a test operation of the robot mechanism based on the moving data measured by the measuring part; and an actual operation control part for controlling an actual operation of the robot mechanism based on a correction value obtained by the learning control carried out by the learning control part.

The moving data may include an acceleration data of the end effector and the measuring part may include an acceleration sensor for measuring the acceleration of the end effector.

Further, the moving data may include a position data of the end effector and the measuring part may include a vision sensor for detecting the position of the end effector.

The vision sensor may be attached to the end effector. Alternatively, the vision sensor may be located on an arbitrary fixed position in an operating area.

Commands for the robot mechanism from the learning control part and the actual operation control part may include at least one of a speed command, a torque command and a position command.

According to another aspect of the invention, there is provided a method for controlling a robot comprising: a robot mechanism; an end effector attached to the robot mechanism; a measuring part for measuring moving data of the robot mechanism or the end effector by the motion of the robot mechanism; and a control device for controlling the motion of the robot mechanism, wherein the method comprises steps of: carrying out a learning control to improve the motion of the robot mechanism, by controlling a test operation of the robot mechanism based on the moving data measured by the measuring part; and controlling an actual operation of the robot mechanism based on a correction value obtained by the learning control.

In the method, it is preferable that the step of carrying out the learning control includes repeatedly executing the test operation.

BRIEF DESCRIPTION OF THE DRAWINGS

The above and other objects, features and advantages of the present invention will be made more apparent by the following description of the preferred embodiments thereof with reference to the accompanying drawings wherein:

Fig. 1 is a schematic view showing a constitution of a robot and a block construct of a robot control device according to the present invention;
Figs. 2a and 2b are flowcharts showing the playback of a program in the robot; and

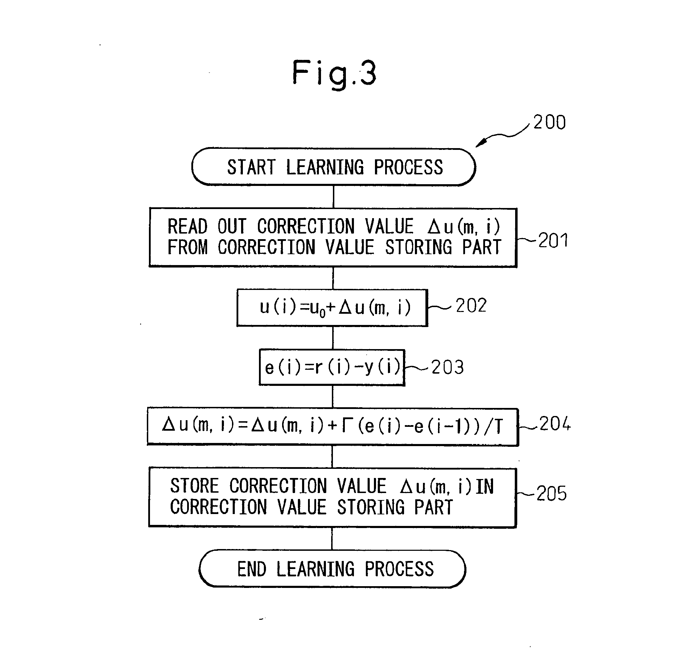

Fig. 3 is a flowchart showing a detail of a learning process included in the flowchart of Fig. 2b.

DETAILED DESCRIPTION

Hereinafter, with reference to the drawings, a robot according to a preferable embodiment of the invention will be described.

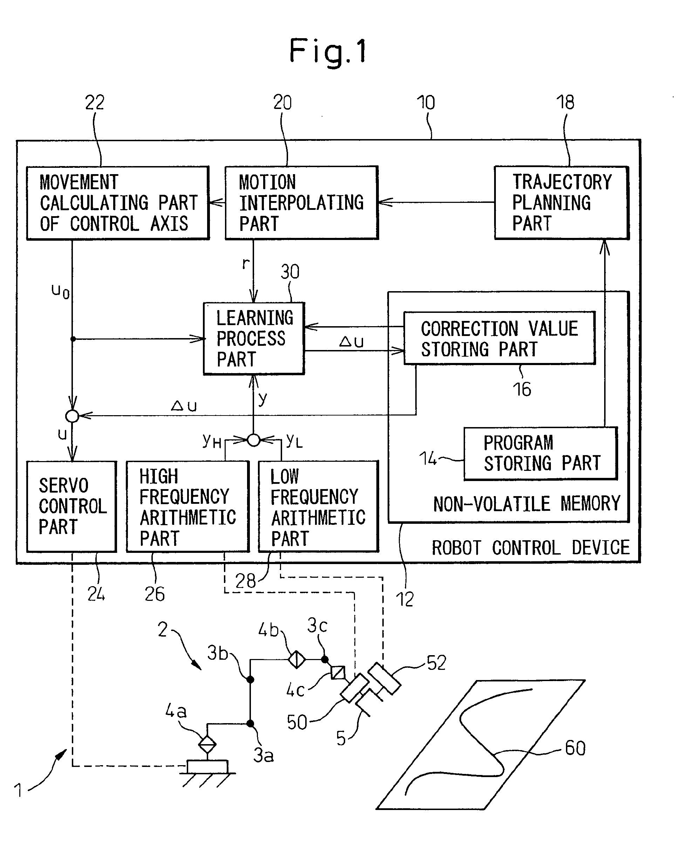

Fig. 1 shows a constitution of a robot 1 and a block construct of a robot control device 10 of the robot 1. In this embodiment, a learning control part is constituted by a learning process part and a servo control part described below.

The robot is preferably a multi-joint robot and has a robot mechanism 2 including three turnable joints 3a, 3b and 3c and three rotatable joints 4a, 4b and 4c. An end effector 5 is attached to the end (or the joint 4c in this case) of the robot mechanism 2. An acceleration sensor 50 and a vision sensor 52 as measuring parts for measuring moving data of the end effector 5 are attached to the end effector. The acceleration sensor 50 detects the acceleration of the end effector 5 in the directions of translation and rotation. The vision sensor 52 detects a coordinate of a marker 60 in the directions of translation and rotation relative to the end effector 5. The marker 60 is arranged at a fixed position in an operating area. Alternatively, another marker may be arranged at a suitable portion of the end effector 5 and the vision sensor 52 may be positioned at a suitable fixed position so as to detect the marker. The acceleration sensor 50 and the vision sensor 52 may be configured to measure moving data of a part of the robot mechanism 2 other than the end effector 5.

A control device for controlling the robot 1 has a non-volatile memory 12. The non-volatile memory 12 includes a program storing part 14 for storing a predetermined robot program and a correction value storing part 16 for storing a correction value (described above) at every interpolative period in each statement included in the robot program.

The robot control device 10 also has a trajectory planning part 18, a motion interpolating part 20 and a movement calculating part 22. The planning part 18 creates a target trajectory of the end effector 5, during the playback of the robot program, based on information such as a start position, an end position, a moving speed and a mode of interpolation included in the statements of the program. The interpolating part 20 creates the positions of the end effector 5 at every interpolative period based on the target trajectory. The movement calculating part 22 calculates the position of each control axis of the robot corresponding to the position of the end effector 5 at every interpolative period and calculates the amount of movement of each control axis at every interpolative period. The robot control device 10 further has a drive control part 24, such as a servo control part, which sends a motion command to the robot mechanism 2, for controlling driving of each control axis. The calculating part 22 sends an initial value of the speed command to the servo control part 24.

The robot control device 10 includes a high frequency arithmetic part 26 and a low frequency arithmetic part 28 each calculating a high frequency component and a low frequency component of the deviation of the trajectory of the actual motion (or the actual trajectory) of the end effector 5. The high and low frequency arithmetic parts 26 and 28 execute a calculation based on information from the acceleration sensor 50 and the vision sensor 52, respectively. The actual a trajectory of the end effector 5 may be calculated by the summation of the outputs of the high and low frequency arithmetic parts 26 and 28. A threshold distinguishing the high frequency from the low frequency is several tens of Hz.

The control device 10 further includes a learning process part 30 for executing a learning process 200 described below, based on the target and the actual trajectories of the end effector 5.

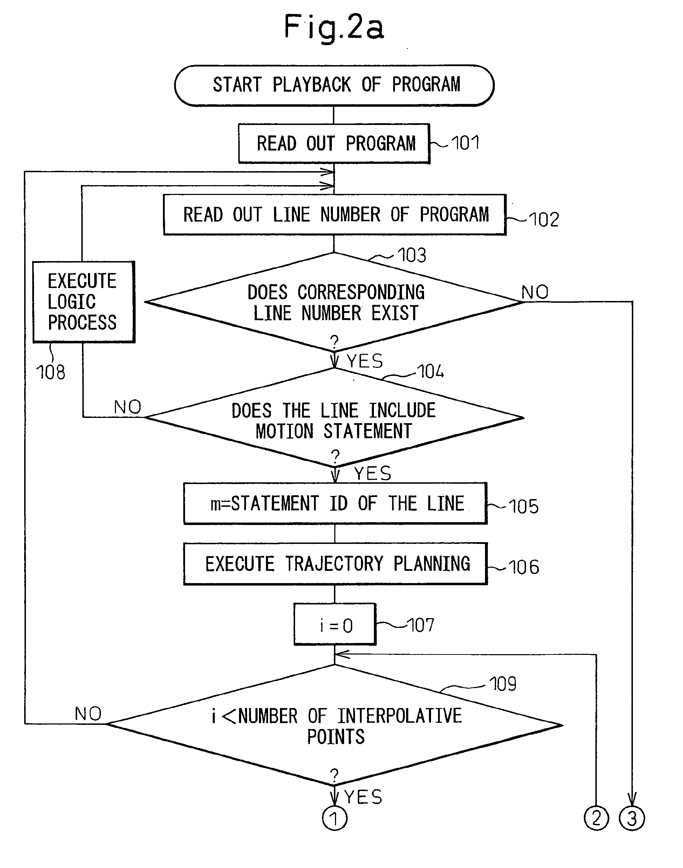

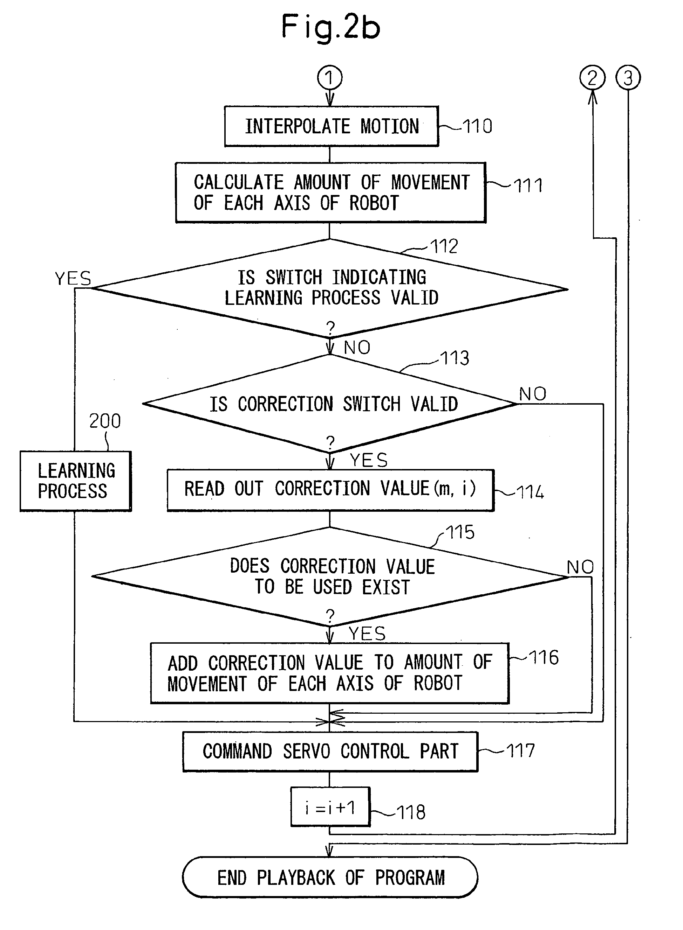

Next, with reference to Figs. 2a and 2b, a flowchart of the playback of the robot program by the robot control device 10 is described.

When the playback of the program starts, the program stored in the program storing part 14 is read out by the trajectory planning part 18 (Step 101).

Then, the planning part 18 executes the program sequentially or by selecting a line of the program. In this case, the planning part reads out a line number to be executed (Step 102) and judges whether a line corresponding to the line number exists (Step 103). When the line does not exist, the playback is terminated. Otherwise, the planning part further judges whether the line includes a statement of motion (Step 104). If yes, an ID of the statement is stored in a register as a variable m (Step 105). Next, the planning part 18 makes a trajectory plan corresponding to the line (Step 106) and sets an interpolative period counter "i" to zero (Step 107).

When the line does not includes a statement of motion, the procedure progresses to Step 108 for executing a logical process, from Step 104, and returns to Step 102.

In step 109 next to Step 107, the interpolative period counter "i" is compared to the number of interpolative points determined in the trajectory plan. When the counter "i" is equal to or larger than the number of interpolative points, the motion of the line is considered to be completed and the procedure returns to Step 102 for executing next selected line. On the other hand, when the counter "i" is smaller than the number of interpolative points, the motion of the line has not been completed and the procedure progresses to Step 110 for interpolating the motion by using the motion interpolating part 20. The interpolating part 20 creates the target position $r(i)$ of the end effector 5 at every interpolative period, based on the trajectory created by the trajectory planning part 18.

Next, in Step 111, the movement calculating part 22 calculates the position of each control axis of the robot mechanism 2 corresponding to the target position $r(i)$ of the end effector 5. The calculating part 22 further calculates the amount of movement of each axis at every interpolative period and the command speed $u_0(i)$ of each axis when the learning process does not executed. Then, a switch, indicating whether the current operation is of the learning control is checked (Step 112). For example, the switch may be previously operated by an operator. When the current operation is of the learning control, the procedure progresses to a learning process 200 described below. Otherwise, a correction switch indicating whether the correction should be done based on the last learning process (Step 113). For example, the correction switch may be previously operated by the operator.

When the correction switch is valid in Step 113, a speed correction value $\Delta u(m, i)$ corresponding to the statement ID (or "m") and the interpolative period counter "i" is read out from the correction value storing part 16 (Step 114). Then, when the value $\Delta u(m, i)$ is judged to be set, in Step 115, the command speed $u(i)$ sent to the servo controller 24 may be calculated, in Step 116, by Equation (1) as follows:

$$u(i) = u_0(i) + \Delta u(m, i) \tag{1}$$

Next, in Step 117, the command speed $u(i)$ is sent to the servo controller 24.

On the other hand, when the correction switch is invalid in Step 113, the procedure directly progresses to Step 117. The command speed $u(i)$ sent to the servo controller 24 in this case is represented by an Equation (2) .

$$u(i) = u_0(i) \tag{2}$$

After Step 117, the interpolative counter "i" is incremented by one (Step 118) and the procedure returns to Step 109 in order to compare the value "i" with the number of the interpolative points. The robot program terminates when no line in the program can be selected in Step 103.

Next, the above learning process 200 is described.

First, the learning process part 30 reads out the speed correction value $\Delta u(m, i)$ from the correction value storing par 16 (Step 201). The learning process part 30 then sends the value $u(i)$, as the command speed obtained by the above Equation (1), to the servo controller 24 (Step 202) in order to actually operate the robot.

Next, in Step 203, the learning process part 30 calculates a deviation $e(i)$ at every interpolative period, according to an Equation (3) below, using the target position $r(i)$ of the end effector 5 calculated in Step 110 by the interpolating part 20 and an actual position $y(i)$ or a trajectory of the end effector 5 measured by the sensors 50 and 52 when the servo controller 24 is activated.

$$e(i) = r(i) - y(i) \tag{3}$$

At this point, the value $y(i)$ may be calculated by an Equation (4) below, using a high frequency component $y_H(i)$ calculated using an output of the acceleration sensor 50 converted into the position data and a low frequency component $y_L(i)$ calculated using an output of the vision sensor 52 converted into the position data.

$$y(i) = y_H(i) + y_L(i) \qquad\qquad (4)$$

The learning process part 30 then calculates a new correction value $\Delta u\,(m, i)_N$ (Step 204) and updates or stores the value in the correction value storing part 16 (Step 205). The correction value $\Delta u(m, i)_N$ is calculated by an Equation (5) using a constant matrix $\Gamma$ predetermined for converting the deviation $e(i)$ into the command speed and a speed correction value $\Delta u(m, i)_0$ read out from the correction value storing part 16. A value T is an interpolative period.

$$\Delta u(m, i)_N = \Delta u(m, i)_0 + \Gamma(e(i) - e(i-1))/T \qquad (5)$$

When the value "i" = 0, the Equation (5) may be rewritten as follows:

$$\Delta u(m, i)_N = \Delta u(m, i)_0 + \Gamma e(i)/T \qquad\qquad (5)'$$

In the embodiment, the servo controller 24 sends a speed command as a motion command to the robot mechanism 2. However, the speed command may be replaced with a torque command including a torque value of a driving device for each axis of the robot mechanism 2 or a position command including a coordinate of the end effector 5.

The robot control device 10 may once or repeatedly execute the above learning process, in the state in which the sensors 50 and 52 are attached to the end effector 5 of the robot 1, in only a test operation. Therefore, as the learning process is not executed in the actual operation, the speed correction value $\Delta u(m, i)$ is not updated and the value $\Delta u(m, i)$ finally stored in the test operation is used for the correction. In other words, the robot control device 10 does not use the information of the sensors in the actual operation and controls the robot based on an optimized motion obtained by the test operation.

As described above, the robot 1 completes the learning of the optimized motion in the test operation. Therefore, the accuracy of the trajectory of the end effector of the following actual operation may be remarkably improved from the start of the actual operation. Further, as the two kinds of sensors 50 and 52 are used for obtaining the high and low frequency components, the accuracy may be further improved. The motion of the robot may be further optimized by repeating the test operation.

As the sensors are not used in the actual operation, the maintenance of the sensors may be reduced. Further, if the sensors interfere with an external equipment in the actual operation, the sensors may be removed.

By using the acceleration sensor, the high frequency deviation may be tracked and a control with high accuracy may be possible.

While the invention has been described with reference to specific embodiments chosen for the purpose of illustration, it should be apparent that numerous modifications could be made thereto, by one skilled in the art, without departing from the basic concept and scope of the invention.

**Claims**

1. A robot (1) comprising:

    a robot mechanism (2);
    an end effector (5) attached to the robot mechanism (2);
    a measuring part (50, 52) for measuring moving data of the robot mechanism (2) or the end effector (5) by the motion of the robot mechanism (2); and
    a control device (10) for controlling the motion of the robot mechanism (2),
    wherein the control device (10) comprises:

        a learning control part (30, 24) for carrying out a learning control to improve the motion of the robot mechanism (2), by controlling a test operation of the robot mechanism (2) based on the moving data measured by the measuring part (50, 52); and
        an actual operation control part (24) for controlling an actual operation of the robot mechanism (2) based on a correction value obtained by the learning control carried out by the learning control part (30, 24).

**2.** The robot as set forth in claim 1, wherein the moving data includes an acceleration data of the end effector (5) and the measuring part (50, 52) includes an acceleration sensor (50) for measuring the acceleration of the end effector (5).

**3.** The robot as set forth in claim 1, wherein the moving data includes a position data of the end effector (5) and the measuring part (50, 52) includes a vision sensor (52) for detecting the position of the end effector (5).

**4.** The robot as set forth in claim 3, wherein the vision sensor (52) is attached to the end effector (5).

**5.** The robot as set forth in claim 3, wherein the vision sensor (52) is located on an arbitrary fixed position in an operating area.

**6.** The robot as set forth in one of claims 1 to 5,
wherein commands, for the robot mechanism (2), from the learning control part (30, 24) and the actual operation control part (24) include at least one of a speed command, a torque command and a position command.

**7.** A method for controlling a robot (1) comprising:

a robot mechanism (2);
an end effector (5) attached to the robot mechanism (2);
a measuring part (50, 52) for measuring moving data of the robot mechanism (2) or the end effector (5) by the motion of the robot mechanism (2); and
a control device (10) for controlling the motion of the robot mechanism (2),
wherein the method comprises steps of:

carrying out a learning control to improve the motion of the robot mechanism (2), by controlling a test operation of the robot mechanism (2) based on the moving data measured by the measuring part (50, 52); and
controlling an actual operation of the robot mechanism (2) based on a correction value obtained by the learning control.

**8.** The method as set forth in claim 7, wherein the step of carrying out the learning control includes repeatedly executing the test operation.

# Fig.1

# Fig.2a

START PLAYBACK OF PROGRAM

READ OUT PROGRAM ~101

READ OUT LINE NUMBER OF PROGRAM ~102

~103

DOES CORRESPONDING LINE NUMBER EXIST ? — NO

YES ~104

EXECUTE LOGIC PROCESS

108

NO — DOES THE LINE INCLUDE MOTION STATEMENT ?

YES

m=STATEMENT ID OF THE LINE ~105

EXECUTE TRAJECTORY PLANNING ~106

i = 0 ~107

~109

NO — i <NUMBER OF INTERPOLATIVE POINTS ?

YES

① ② ③

# Fig.2b

①

② ③

INTERPOLATE MOTION —110

CALCULATE AMOUNT OF MOVEMENT OF EACH AXIS OF ROBOT —111

112

IS SWITCH INDICATING LEARNING PROCESS VALID ?

YES

NO

113

IS CORRECTION SWITCH VALID ?

NO

YES

200

LEARNING PROCESS

READ OUT CORRECTION VALUE(m, i) —114

115

DOES CORRECTION VALUE TO BE USED EXIST ?

NO

YES

ADD CORRECTION VALUE TO AMOUNT OF MOVEMENT OF EACH AXIS OF ROBOT —116

COMMAND SERVO CONTROL PART —117

$i = i + 1$ —118

END PLAYBACK OF PROGRAM

# Fig.3

200

$\Big($ START LEARNING PROCESS $\Big)$

READ OUT CORRECTION VALUE $\Delta u(m, i)$
FROM CORRECTION VALUE STORING PART ~201

$u(i) = u_0 + \Delta u(m, i)$ ~202

$e(i) = r(i) - y(i)$ ~203

$\Delta u(m, i) = \Delta u(m, i) + \Gamma (e(i) - e(i-1)) / T$ ~204

STORE CORRECTION VALUE $\Delta u(m, i)$ IN
CORRECTION VALUE STORING PART ~205

$\Big($ END LEARNING PROCESS $\Big)$